# EUROPÄISCHE PATENTANMELDUNG

(11) **EP 3 539 377 A1**
(43) Veröffentlichungstag der Anmeldung: **18.09.2019**
(21) Anmeldenummer: 19401012.0
(22) Anmeldetag: 08.03.2019
(51) Int. Cl.: A01M 7/00

(54) **LANDWIRTSCHAFTLICHE FELDSPRITZE**

(30) Priorität: 13.03.2018 DE 102018105737
(71) Anmelder: Amazonen-Werke H. Dreyer GmbH & Co. KG, 49205 Hasbergen (DE)
(72) Erfinder: Austermann, Stefan, 48291 Telgte (DE); Stiegemeyer, Mathias, 49504 Lotte (DE); Dembeck, Achim, 49134 Wallenhorst (DE); Klemann, Timo, 49191 Belm (DE); Lampe, Toivo, 49080 Osnabrück (DE); Feldhaus, Johannes, 23253 Åkarp (SE); Kalkmann, Helmke, 49076 Osnabrück (DE)

(57) **Zusammenfassung**

Landwirtschaftliche Feldspritze mit einem Trägerflüssigkeitstank, zumindest einem Behälter, insbesondere für Pflanzenschutzmittel, einer ersten Pumpe, einer Mischkammer und einem Verteilergestänge, wobei dem zumindest einen Behälter zumindest eine Dosierpumpe zugeordnet ist, wobei der Trägerflüssigkeitstank und die Dosierpumpe mit der Mischkammer verbunden sind und die erste Pumpe dazu eingerichtet ist, Flüssigkeit aus der Mischkammer zum Verteilergestänge zu fördern. Um eine Feldspritze mit einer Schnittstelle zwischen einem Behälter und zumindest einer Dosierpumpe zu schaffen, die das Kontaminationsrisiko reduziert, ist vorgesehen, dass der zumindest eine Behälter mittels eines flüssigkeitsdicht trennbaren Kupplungselementes, welches aus einem Adapter für den Anschluss am Behälter und einem Gegenstück gebildet wird, mit der zumindest einen Dosierpumpe verbunden ist.

## Beschreibung

Die Erfindung betrifft eine landwirtschaftliche Feldspritze gemäß dem Oberbegriff des Patentanspruches 1.

Eine derartige Feldspritze ist in WO 2014200896 A1 beschrieben. Diese Feldspritze umfasst einen Trägerflüssigkeitstank, der in diesem Fall mit Wasser gefüllt ist, und insgesamt drei Behälter für Pflanzenschutzmittel. Der Trägerflüssigkeitstank und die Behälter sind über Leitungen mit einer Mischkammer verbunden. Die Mischkammer wird mit Trägerflüssigkeit und Pflanzenschutzmittel befüllt und dient dazu, die unterschiedlichen Komponenten zu vermischen. Anschließend wird die entstehende gemischte Flüssigkeit von einer ersten Pumpe über ein Verteilergestänge auf einem Feld ausgebracht.

Pflanzenschutzmittel werden üblicherweise als Konzentrat in oben genannten Behältern, welche in der Regel als Kanister mit einer Auslassöffnung ausgeführt sind, aufbewahrt und stehen dem Benutzer der Feldspritze so im verschlossenen Zustand zur Verfügung. Dies hat den Vorteil, dass auf der Feldspritze nur geringe Volumina konzentrierter Mengen an Pflanzenschutzmittel mitgeführt werden müssen, welche verdünnt durch die Trägerflüssigkeit genügen, um große Flächen zu bearbeiten. Andererseits besteht so die Notwendigkeit, die Pflanzenschutzmittel zuerst der Feldspritze gezielt zuzuführen, um sie in dosierter Menge mit der Trägerflüssigkeit zu mischen, um sie ausbringen zu können. Hierzu ist in der vorstehend genannten Druckschrift vorgesehen, dass jedem Behälter eine Dosierpumpe zugeordnet ist. Diese Dosierpumpe ist dazu eingerichtet, kleinste Mengen zu fördern. Die Tätigkeit, das Pflanzenschutzmittel in geeigneter Menge und sauber, das heißt, ohne dass der Benutzer mit dem Pflanzenschutzmittel in unmittelbaren Kontakt kommt, zu dosieren ist dem Benutzer so abgenommen. Derartige Systeme, bei denen die Pflanzenschutzmittel von der Feldspritze mittels jeweils einer Dosierpumpe in die Trägerflüssigkeit eingespeist und so ausgebracht werden, werden Direkteinspeisung genannt.

Problematisch bei Feldspritzen mit Direkteinspeisung bleibt jedoch die Schnittstelle zwischen Behälter und der dem Behälter zugeordneten Dosierpumpe.

Zum Anschließen eines neuen Behälters ist es notwendig diesen zu öffnen und in geeigneter Weise, beispielsweise kopfüber, an die Dosierpumpe anzuschließen, so dass das Pflanzenschutzmittel einfach von der Dosierpumpe dosiert werden kann. Hierbei besteht ein erhebliches Kontaminationsrisiko durch das Pflanzenschutzmittel für den Benutzer. Eine weitere Schwierigkeit stellt das Entfernen entleerter oder teilweise entleerter Behälter aus dem Ausbringkreislauf der Feldspritze dar. Da es sich bei den bekannten Pflanzenschutzmitteln mitunter um zähfließende Konzentrate handelt kann eine restlose Entleerung des Behälters ohnehin nicht gewährleistet werden. Zudem fällt das Ende der Feldarbeit regelmäßig nicht mit der Entleerung eines Behälters zusammen, so dass eine Restmenge im Behälter zurückbleibt. Solche Behälter sind durch den Benutzer zu entsorgen bzw. einzulagern, falls sie eine Restmenge beinhalten, und hierfür von der Feldspritze zu trennen. So besteht für den Benutzer erneut das Risiko mit Pflanzenschutzmittel kontaminiert zu werden.

Die Aufgabe der Erfindung liegt darin, eine Feldspritze mit einer Schnittstelle zwischen einem Behälter und zumindest einer Dosierpumpe zu schaffen, die das Kontaminationsrisiko reduziert.

Diese Aufgabe wird erfindungsgemäß dadurch gelöst, dass der zumindest eine Behälter mittels eines flüssigkeitsdicht trennbaren Kupplungselementes, welches aus einem Adapter für den Anschluss am Behälter und einem Gegenstück gebildet wird, mit der zumindest einen Dosierpumpe verbunden ist. Flüssigkeitsdicht trennbar heißt, dass das Kupplungselement im getrennten Zustand beidseitig abdichtend wirken kann. Folglich kann der Behälter entnommen werden ohne, dass Pflanzenschutzmittel austritt und auch das Gegenstück wirkt abdichtend, so dass aus den angeschlossenen Leitungen kein Kontaminationsrisiko besteht. Eine fluidkommunizierende Verbindung zwischen Behälter und Dosierpumpe kann erst dann hergestellt werden, wenn der Adapter mit dem Gegenstück zusammenwirkt. Infolge dieser Maßnahme ist das Kontaminationsrisiko an der Schnittstelle in besonders effektiver Weise reduziert. Vorzugsweise ist der Adapter an der Auslassöffnung des Behälters befestigbar und dichtet diesen so vorrübergehend ab. Wird der Adapter in das Gegenstück eingesetzt, kann eine Verbindung hergestellt werden, so dass die Dosierpumpe Pflanzenschutzmittel aus dem Behälter dosieren kann.

Es ist denkbar, dass jeweils ein Behälter mit einer Mehrzahl von Dosierpumpen verbunden ist. Vorzugsweise sind die Dosierpumpen parallel zueinander an den Behälter anzuschließen. Infolge dieser Maßnahme ist der maximal mögliche Volumenstrom von Pflanzenschutzmittel aus dem Behälter zur Mischkammer durch die Mehrzahl von Dosierpumpen in zweckmäßiger Weise gesteigert.

Um eine reibungslose Arbeitsweise aller Komponenten und der Feldspritze selber zu fördern, kann eine Befestigungsvorrichtung zum Fixieren von Behältern vorgesehen sein. Die Befestigungsvorrichtung kann so ausgestaltet sein, dass eine auf die Größe der Behälter anpassbare Halterung vorgesehen ist. Auf diese Weise können die Behälter während der Fahrt sicher mitgeführt werden, so dass die Arbeitssicherheit weiter gesteigert ist.

In zweckmäßiger Weise kann vorgesehen sein, dass die Bauteile, insbesondere sämtliche Tanks, Behälter und Kammern, welche durch Ent- und/oder Aufnahme von Fluiden, Unter- und/oder Überdruck erfahren mit geeigneten Entlüftungsmitteln versehen sind. Die geeigneten Entlüftungsmittel sind dazu eingerichtet, Druckunterschiede auszugleichen. Einem druckinduzierten Versagen der Feldspritze ist so in zweckmäßiger Weise vorgebeugt.

In einer vorteilhaften Weiterbildung ist vorgesehen, dass die Feldspritze einen Spülwassertank umfasst, welcher über das Gegenstück mit der Mischkammer verbunden ist. Der Spülwassertank beinhaltet eine zweite Trägerflüssigkeit, vorzugsweise Klarwasser, so dass die Feldspritze auf besonders einfache Art und Weise mit einer Möglichkeit zur Einbringung der zweiten Trägerflüssigkeit versehen ist. Genutzt werden kann diese Möglichkeit beispielsweise, um die Dosierpumpe zu reinigen.

In einer besonders vorteilhaften Weiterbildung umfasst die Feldspritze eine zweite Pumpe, wobei die zweite Pumpe dazu eingerichtet ist, die zweite Trägerflüssigkeit, vorzugsweise Klarwasser, über das Gegenstück in die Mischkammer zu fördern.

Die zumindest eine Dosierpumpe kann mit einem Bypass versehen sein, so dass es an der Dosierpumpe nicht zu einem Rückstau kommt, falls die zweite Pumpe einen größeren Volumenstrom erzeugt als die zumindest eine Dosierpumpe. Infolge dieser Maßnahmen ist die Feldspritze dazu eingerichtet, den Behälter, das Kupplungselement, die zumindest eine Dosierpumpe und die verbindenden Leitungen aktiv mittels der zweiten Pumpe zu spülen. Die zweite Pumpe fördert dazu die zweite Trägerflüssigkeit in den Behälter und/oder durch die Leitungen in Richtung Mischkammer. In vorteilhafter Weise ist die Feldspritze so dazu eingerichtet, Behälter, insbesondere entleerte Behälter, zu spülen. Dies ist besonders vorteilhaft, weil so das Kontaminationsrisiko für den Benutzer bei der Entnahme eines solchen Behälters weiter reduziert ist.

Zwischen Gegenstück und Spülwassertank kann ein Absperrventil angeordnet sein. Vorzugsweise ist das Absperrventil schaltbar, so dass die zweite Trägerflüssigkeit kontrolliert eingebracht werden kann.

In einer weiteren vorteilhaften Weiterbildung der Erfindung ist der Adapter zum Gegenstück hin verschließbar. In vornehmlich zweckmäßiger Weise ist so die Option geschaffen auch Behälter, die eine Restmenge von Pflanzenschutzmittel beinhalten, zumindest annährend kontaminationsfrei zu entnehmen. Ist der Adapter zum Gegenstück verschlossen, kann das Gegenstück mittels der zweiten Pumpe gereinigt werden. Die Trennstelle zwischen Adapter und Gegenstück ist somit nahezu frei von Pflanzenschutzmittel und es besteht nahezu kein Risiko für den Benutzer wenn ein mittels des Adapters wieder verschlossener Behälter entnommen wird.

Es ist denkbar, dass die Feldspritze eine Umlaufleitung von der zumindest einen Dosierpumpe zum Gegenstück aufweist. Vorzugsweise ist die Umlaufleitung mittels eines schaltbaren Wegeventils angebunden. Die Umlaufleitung mündet im Gegenstück und/oder dem Behälter.

Der Adapter kann eine Spüldüse aufweisen, welche in den Behälter gerichtet ist. Vorzugsweise ist die Mündung der Umlaufleitung mit der Spüldüse verbindbar. Infolge dieser Maßnahme ist die Feldspritze dazu eingerichtet, Behälter nahezu restlos zu entleeren und das Pflanzenschutzmittel zumindest annährend vollständig zu nutzen.

Weiterhin vorteilhaft bei dieser Ausführung ist, dass keine mit Restmengen belasteten Behälter zurückbleiben, deren fachgerechte Entsorgung aufwendig und teuer ist. Ebenso bleibt keine mit Pflanzenschutzmitteln belastete Spülflüssigkeit zurück, weil diese während der Ausbringung regulär in pflanzenbaulich verträglicher Weise mit ausgebracht wird.

Falls der Behälter sich durch die Dosierpumpe nicht weiter entleeren lässt, da beispielsweise an den Behälterwänden Restmengen von Pflanzenschutzmittel anhaften, kann mit Hilfe der Umlaufleitung und/oder der zweiten Pumpe eine definierte Menge der zweiten Trägerflüssigkeit in den Behälter eingeleitet werden, so dass sich die Restmengen möglichst lösen. Vorzugsweise ist dazu die Spüldüse mit der Umlaufleitung und/oder der zweiten Pumpe verbunden. Dadurch kann die zweite Trägerflüssigkeit unter Druck durch die Spüldüse in den Behälter eingebracht werden.

Vorzugsweise ist bekannt, beispielsweise durch eine Software und/oder eine Datenbank, wie viel Restmenge üblicherweise in einem Behälter anhaftet, so dass die definierte Menge an zweiter Trägerflüssigkeit so bestimmt wird, dass die entstehende Mischung pflanzenbaulich sinnvoll genutzt werden kann.

Weiter kann eine solche Umlaufleitung bei längeren Stillstandsphasen der Feldspritze dazu dienen eine Möglichkeit zu schaffen, das Pflanzenschutzmittel umzuwälzen, sprich im Kreis zu fördern. In vorteilhafter Weise kann so verhindert werden, dass sich bei Stillstand der Maschine Pflanzenschutzmittel in den Leitungen absetzen, indem eine Zirkulation durch die Dosierpumpe über die Umlaufleitung und das Gegenstück erzeugt wird. Ebenso denkbar ist, dass Behälter nicht mit, wie üblich flüssigen, sondern pulver- oder granulatförmigen Pflanzenschutzmitteln gefüllt sind. In diesem Fall kann die Umlaufleitung dazu dienen derartige Pflanzenschutzmittel mit einer Trägerflüssigkeit anzumischen, so dass eine Ausbringung ermöglicht und/oder erleichtert wird.

In einer weiteren vorteilhaften Weiterbildung der Erfindung ist vorgesehen, dass die Feldspritze zumindest eine Spülleitung zwischen der zweiten Pumpe und der ersten Pumpe umfasst, und dass der Spülleitung ein weiteres Gegenstück zugeordnet ist. Das zweite Gegenstück ist bevorzugt dem ersten Gegenstück analog aufgebaut. In besonders vorteilhafter Weise ist es so möglich mittels der zweiten Pumpe die zweite Trägerflüssigkeit in mit einem Adapter versehene, in das zweite Gegenstück eingesetzte Behälter einzubringen und diese so zu reinigen, während zeitgleich mittels der zumindest einen Dosierpumpe Pflanzenschutzmittel aus einem anderen Behälter dosiert wird. Das erste Gegenstück und das zweite Gegenstück werden somit parallel betrieben. Beispielsweise kann dabei während eines Ausbringvorgangs ein Behälter in das erste Gegenstück eingesetzt und über die zumindest eine Dosierpumpe entleert worden sein. Anschließend ist der entleerte Behälter aus dem ersten Gegenstück zu entnehmen und in das zweite Gegenstück einzusetzen. Ein weiterer Behälter ist in das erste Gegenstück einzusetzen.

Der Benutzer spart somit insgesamt Zeit, da er während der Ausbringung von Pflanzenschutzmittel aus dem einen Behälter zeitgleich einen anderen Behälter spülen kann, so dass dieser zweite Behälter vor der endgültigen Entsorgung nicht zusätzlich gereinigt werden muss. Außerdem kann die durch die Spülung entstehende Spülbrühe in einfacher Weise direkt mit ausgebracht werden, falls die beiden Behälter die gleichen bzw. unbedenklich mischbaren Pflanzenschutzmittel beinhaltet haben.
Vorteilhaft ist weiterhin, dass die Spülbrühe nur ausgebracht wird, wenn die Feldspritze Bereiche befährt, die zur Behandlung mit dem in der Spülbrühe enthaltenen Wirkstoffen vorgesehen sind oder bereits entsprechend behandelt worden sind. In anderen Bereichen kann die Spülung entsprechend unterbrochen werden. Die Spülbrühe enthält bevorzugt Wirkstoffe in sehr niedriger Konzentration, sodass eine zusätzliche Ausbringung der Spülbrühe pflanzenbaulich unbedenklich ist, da sie nicht zu einer übermäßigen Behandlung führt.

Es ist auch möglich, dass z. B. über die Kenntnis der in einem über die zumindest eine Dosierpumpe entleerten Behälter zurückbleibenden Restmenge die Konzentration eier Spülbrühe ermittelbar oder gezielt einstellbar ist, sodass diese gezielt im Ausbringvorgang einsetzbar ist.

Es ist denkbar, dass die sich in der Spülleitung ansammelnde Flüssigkeit zur ausgebracht wird, wenn zeitgleich zur Dosierung ein das gleiche Pflanzenschutzmittel beinhaltender Behälter eingesetzt wird, wie der gespülte Behälter. Alternativ kann die Flüssigkeit aus der Spülleitung auf Flächen ausgebracht werden, auf denen das gleiche Pflanzenschutzmittel ausgebracht worden ist, wie der gespülte Behälter ursprünglich beinhaltet hat. So kann in einfacher Weise verhindert werden, dass schädliche Resistenzen gefördert werden.

Es ist denkbar, dass die Spülleitungen vor dem weiteren Gegenstück und vor der ersten Pumpe jeweils ein schaltbares Absperrventil aufweisen. So kann verhindert werden, dass dauerhaft Trägerflüssigkeit durch die Spülleitung gepumpt wird. Weiter ist denkbar, dass diese beiden Absperrventile von einem Füllstandsmelder schaltbar sind, wobei die Absperrventile gegensätzlich öffnen bzw. schließen. Beispielsweise kann die Spülleitung zuerst gefüllt werden bevor die entstehende Brühe ausgebracht wird, so dass die erste Pumpe keine Luft ansaugt, indem das Absperrventil vor der ersten Pumpe zuerst geschlossen ist. Das Absperrventil vor dem Gegenstück hingegen ist geöffnet, so dass sich die Spülleitung stetig füllt. Der Füllstandsmelder ist so angeordnet, dass er detektiert, wenn die Spülleitung gefüllt ist. Wenn die Spülleitung gefüllt ist, schließt das Absperrventil vor dem ersten Gegenstück und das Absperrventil vor der ersten Pumpe öffnet So kann Flüssigkeit durch die Spülleitung gefördert werden. Dabei ist ein Nachfließen der zweiten Trägerflüssigkeit sicher gestellt, sodass die erste Pumpe keine Luft ansaugt.

Ebenfalls denkbar ist, dass die Spülleitung zwischen der zweiten Pumpe und der Mischkammer verläuft und, anstelle des Absperrventils vor der ersten Pumpe, eine weitere Pumpe umfasst, welche sodann aktiv in die Mischkammer fördert.

In einer vornehmlich vorteilhaften Weiterbildung der Erfindung bilden der Behälter mit zumindest einer Dosierpumpe, das Kupplungselement und das Absperrventil eine Dosiereinheit und die Feldspritze umfasst zumindest zwei, vorzugweise parallel angeschlossene, Dosiereinheiten. Besonders vorteilhaft ist hierbei, dass die Feldspritze so dazu eingerichtet ist parallel aus mehreren Behältern Pflanzenschutzmittel zu dosieren. Es ist offensichtlich, dass auf diese Weise die mit einem Pflanzenschutzmittel bearbeitbare Fläche verdoppelt werden kann indem zwei Behälter, die das gleiche Pflanzenschutzmittel beinhalten, angeschlossen und zur Dosierung verwendet werden.

Alternativ oder zusätzlich ist hierbei vorteilhaft, dass diese Ausführung in einfacher Weise die Zugabe der doppelten Konzentration an Pflanzenschutzmitteln einzuspeisen. Alternativ ist bei Bestückung mit verschiedenen Behältern die Einspeisung verschiedener Pflanzenschutzmittel möglich.

In vorteilhafter Weise können Füllstandsmelder vorgesehen sein, welche den Füllstand der Behälter erfassen. Somit kann festgestellt werden, dass beispielsweise ein Behälter leer ist. Bei paralleler Nutzung mehrerer Behälter kann dann das System automatisiert auf einen weiteren Behälter umschalten. Alternativ kann dem Nutzer ein Hinweis über den entleerten Behälter ausgeben werden, dass dieser getauscht und/oder ggf. zur Spülung in das zweite Gegenstück eingesetzt werden muss.

Ebenfalls denkbar ist, dass unterschiedliche Pflanzenschutzmittel parallel verwendet werden. So weist die Feldspritze eine gesteigerte Flexibilität für die Zusammensetzung der in der Mischkammer entstehenden Flüssigkeit, welche über das Verteilergestänge auf dem Feld ausgebracht wird, auf. In einfacher Weise lässt sich die Dosierung der Pflanzenschutzmittel so den Bedürfnissen der überfahrenen Fläche anpassen.

In einer Weiterbildung, in der die Feldspritze zwei oder mehr parallel angeschlossene, wie beschrieben ausgeführte, Dosiereinheiten umfasst, ist es denkbar, dass diese jeweils eine schaltbare Verbindung zur Saugseite der ersten Pumpe aufweisen. In Zusammenschau mit vorstehend beschriebenen vorteilhaften Weiterbildungen ist die Feldspritze so dazu eingerichtet, mittels einer der Dosiereinheiten einen Behälter zu spülen, während mittels der anderen Dosiereinheit Pflanzenschutzmittel dosiert wird. Die spülende Dosiereinheit wird in diesem Fall mit der Saugseite der ersten Pumpe verbunden, während die dosierende Dosiereinheit, wie gewohnt, in die Mischkammer fördert.
Es ist vorteilhaft, dass eine Leitung zwischen dem Gegenstück und der zumindest einen Dosierpumpe vorgesehen ist, welche ein Wegeventil aufweist. Über das Wegeventil kann die Spülbrühe direkt zum Füllstandsmelder geleitet werden. In diesem Fall kann die Abflussseite der zum Spülen eingesetzten Dosiereinheit mit der Spülleitung verbunden sein, um die entstehende Flüssigkeit gezielt mit auszubringen. In diesem Fall kann auch das zweite Gegenstück entfallen. Dadurch kann eine kostengünstige Ausführungsform der Erfindung erreicht werden.

Ein weiterer Vorteil ist in diesem Fall dadurch gegeben, dass die Leitungen zwischen der Dosiereinheit und der Mischkammer nicht mit Spülbrühe gefüllt werden. Dadurch steht auch im Falle eines Wechsels des Behälters in diesen Leitungen immer die richtige Konzentration an Pflanzenschutzmittel zur Verfügung, sodass der Ausbringvorgang nahtlos fortgesetzt werden kann. Dadurch kann eine erhebliche Zeitersparnis und eine stets korrekt dosierte Ausbringung erreicht werden.
In einer weiteren vorteilhaften Weiterbildung der Erfindung umfasst die Feldspritze zumindest zwei, vorzugsweise parallel angeschlossene, Spülleitungen. In besonders zweckmäßiger Weise ist die Feldspritze so dazu eingerichtet zeitgleich mehrere Behälter mittels separater Spülleitungen zu spülen. Es ist denkbar, dass die Feldspritze weitere, ebenfalls vorzugsweise parallel angeschlossene, Spülleitungen umfasst, um eine gesteigerte Anzahl von Behältern zeitgleich spülen zu können.

In einer weiteren besonders vorteilhaften Weiterbildung ist vorgesehen, dass die Feldspritze zumindest zwei Dosiereinheiten und zumindest zwei Spülleitungen umfasst. Infolge dieser Maßnahme ist die Feldspritze besonders vielseitig und flexibel einsetzbar. Diese Weiterbildung kombiniert die vorstehend genannten Vorteile vornehmlich einträglich. Es ist denkbar, dass die Anzahl der Dosiereinheiten und/oder die Anzahl der Spülleitungen entsprechend der Bedürfnisse des Benutzers weiter angepasst, also gesteigert bzw. reduziert, ausgebildet ist.

Der Betrieb einer vorstehend beschriebenen Feldspritze zeichnet sich durch die folgenden Verfahrensschritte aus:
*a*. Versehen eines Behälters, insbesondere für Pflanzenschutzmittel, mit einem Adapter,
*b.* Einsetzen des Behälters mit dem Adapter in ein Gegenstück eines Kupplungselementes,
*c*. Dosieren mittels zumindest einer Dosierpumpe aus dem Behälter in eine Mischkammer,
*d.* Einbringen einer ersten Trägerflüssigkeit aus einem Trägerflüssigkeitstank in die Mischkammer mittels einer ersten Pumpe,
*e*. Verteilen von Flüssigkeit aus der Mischkammer mittels eines Verteilergestänges.

Das Kontaminationsrisiko durch Kontakt mit dem Pflanzenschutzmittel ist so für den Benutzer in einfacher Weise reduziert.

Alternativ zu Schritt a und b kann auch ein Behälter der schon mit einem Adapter versehen ist, beispielsweise aus einem Lager, in das Gegenstück des Kupplungselementes eingesetzt werden.

In einer Weiterbildung der Erfindung kann das Verfahren zusätzlich den weiteren Schritt umfassen:
*f.* Einbringen einer zweiten Trägerflüssigkeit, vorzugsweise Klarwasser, aus einem Spülwassertank in das Kupplungselement und/oder den Behälter.

In einer weiteren vorteilhaften Weiterbildung der Erfindung kann das Verfahren zusätzlich den weiteren Schritt umfassen:
*g.* Pumpen der zweiten Trägerflüssigkeit durch das Kupplungselement und/oder den Behälter in die Mischkammer.

Zudem kann die zweite Trägerflüssigkeit auch zirkulierend gepumpt werden, wenn die Feldspritze die Umlaufleitung von der Dosierpumpe zum Gegenstück umfasst.

Außerdem kann das Verfahren zum Betrieb der Feldspritze einen der folgenden Schritte umfassen:
*h*. Verschließen des Adapters zum Gegenstück hin,
*i*. oder Öffnen des Adapters zum Gegenstück hin.

In einer besonders vorteilhaften Weiterbildung der Erfindung kann das Verfahren folgende weitere Schritte umfassen:
*j.* Entfernen des Behälters mit dem Adapter aus dem Gegenstück des Kupplungselementes,
*k.* Einsetzen des Behälters mit dem Adapter in ein zweites Gegenstück einer Spülleitung,
*l*. Versehen eines zweiten Behälters mit einem zweiten Adapter,
*m*. Einsetzen des zweiten Behälters mit dem zweiten Adapter in das Gegenstück des Kupplungselementes,
*n.* Dosieren mittels der zumindest einen Dosierpumpe aus dem zweiten Behälter in die Mischkammer,
*o*. Pumpen der zweiten Trägerflüssigkeit durch die Spülleitung und das zweite Gegenstück und/oder den in das zweite Gegenstück eingesetzten Behälter zur ersten Pumpe.

Alternativ zu Schritt I und m kann auch ein zweiter bereits mit einem Adapter versehener Behälter, beispielsweise aus einem Lager, in das Gegenstück des Kupplungselementes eingesetzt werden.

Weiter kann das Verfahren die folgenden Schritte umfassen:
*p.* Bestücken zumindest einer weiteren Dosiereinheit mit einem weiteren Behälter,
*q.* Dosieren mittels zumindest einer Dosierpumpe der weiteren
   Dosiereinheit aus dem weiteren Behälter in die Mischkammer, und/oder
*r.* Einsetzen eines anderen weiteren Behälters in zumindest ein weiteres Gegenstück einer weiteren Spülleitung,
*s.* Pumpen der zweiten Trägerflüssigkeit durch die weitere Spülleitung und das weitere Gegenstück und/oder den eingesetzten Behälter zur ersten Pumpe.

Weitere Vorteile des Verfahrens sind der vorstehenden Vorteilsbeschreibung zur Vorrichtung zu entnehmen.

Weitere Einzelheiten der Erfindung sind der Beispielsbeschreibung und den Zeichnungen zu entnehmen. Die Zeichnungen zeigen
- Fig.1: ein erstes Fließbild einer erfindungsgemäßen landwirtschaftlichen Feldspritze, und
- Fig.2: ein zweites Fließbild einer erfindungsgemäßen landwirtschaftlichen Feldspritze.

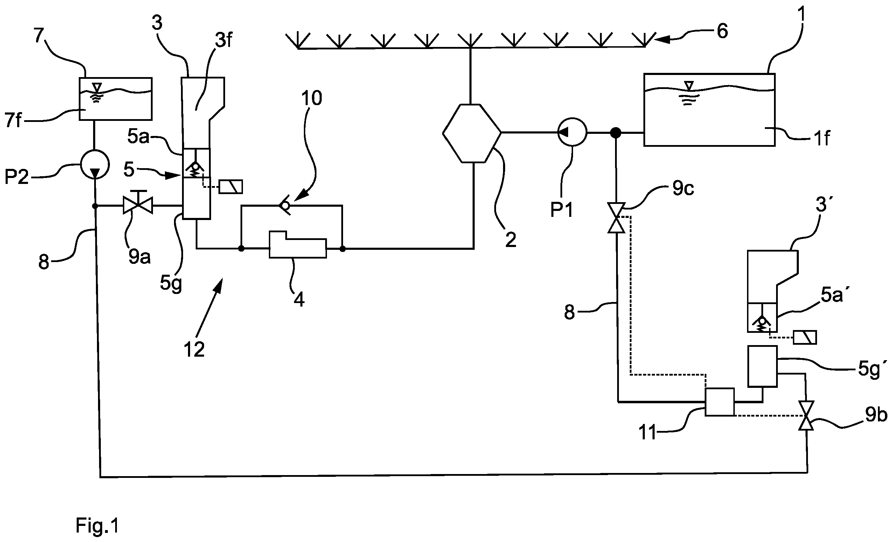

Eine landwirtschaftliche Feldspritze umfasst einen Trägerflüssigkeitstank 1, der mit einer ersten Trägerflüssigkeit 1f gefüllt ist. Die erste Trägerflüssigkeit 1f wird auch Brühe 1f genannt und ist zur flächendeckenden Ausbringung auf einem Feld vorgesehen. Die erste Trägerflüssigkeit 1f kann beispielsweise Wasser oder eine bereits vorgemischte Brühe 1f sein. Darüber hinaus weist die erfindungsgemäße landwirtschaftliche Feldspritze die Möglichkeit auf, in die Brühe 1f in einer Mischkammer 2 ein weiteres Pflanzenschutzmittel 3f aus einem Behälter 3 direkt einzuspeisen. Hierzu ist dem Behälter 3 eine Dosierpumpe 4 zugeordnet, welche über eine Leitung mit der Mischkammer 2 verbunden und dazu eingerichtet ist das Pflanzenschutzmittel 3f zu dosieren, wie ein erstes Fließbild einer erfindungsgemäßen Feldspritze in Fig.1 zeigt. In einer nicht gezeigten Weiterbildung sind zwischen der Mischkammer 2 und dem Behälter 3 eine Mehrzahl parallel zueinander angeschlossener Dosierpumpen angeordnet, um beispielsweise den förderbaren Volumenstrom von Pflanzenschutzmittel 3f zu steigern. Die gezeigte Feldspritze umfasst außerdem eine erste Pumpe P1, die auch als Spritzpumpe P1 bezeichnet wird, über die der Trägerflüssigkeitstank 1 ebenfalls mit der Mischkammer 2 verbunden ist. Mittels der Spritzpumpe P1 wird die in der Mischkammer 2 entstehende Flüssigkeit aus der ersten Trägerflüssigkeit 1f und zumindest zeitweise eingespeistem Pflanzenschutzmittel 3f über ein Verteilergestänge 6 auf dem Feld ausgebracht.

Um das Kontaminationsrisiko durch Kontakt mit dem Pflanzenschutzmittel 3f für den Benutzer zu reduzieren, ist der Behälter 3 mittels eines Kupplungselementes 5 mit der Dosierpumpe 4 verbunden. Das Kupplungselement 5 ist gebildet aus einem Adapter 5a und einem Gegenstück 5g. Das Kupplungselement 5 ist zwischen dem Adapter 5a und dem Gegenstück 5g trennbar, wobei im getrennten Zustand des Kupplungselementes 5 zumindest der Behälter 3 durch den Adapter 5a flüssigkeitsdicht verschlossen ist. Eine Entnahme von Pflanzenschutzmittel 3f aus dem Behälter 3 mittels der Dosierpumpe 4 bzw. ein Spülen des Behälters 3 ist nur dann möglich, wenn der Adapter 5a in das Gegenstück 5g eingesetzt ist.

Das Gegenstück 5g ist vorzugsweise fest mit Zulauf- und Ablaufleitungen verbunden und somit fester Bestandteil des Flüssigkeitskreislaufs der Feldspritze; der Adapter 5a ist an einer Auslassöffnung des Behälters 3 befestigbar. Dabei durchbricht er ggf. eine die Auslassöffnung verschließende Siegelfolie. Der Adapter 5a kann gebildet werden durch ein federbelastetes Rückschlagventil, dessen Öffnung bei Ansteuerung verhindert werden kann, so dass der Adapter 5a zum Gegenstück 5g hin verschließbar ist. Ist der Adapter 5a in das Gegenstück 5g eingesetzt, so dass eine fluidkommunizierende Verbindung zur Saugseite der beispielsweise als Kolbenpumpe ausgeführten Dosierpumpe 4 hergestellt ist ist der Adapter 5a generell offen, sofern die Ansteuerung nicht betätigt ist. Auf diese Weise wird das Pflanzenschutzmittel 3f dem Behälter 3 durch die Dosierpumpe 4 entnommen.

In dem in Fig.1 gezeigten Fließbild umfasst die Feldspritze einen Spülwassertank 7, der mit einer zweiten Trägerflüssigkeit 7f, vorzugsweise mit Klarwasser 7f, gefüllt ist. Weiterhin ist eine zweite Pumpe P2, die auch als Klarwasserpumpe P2 bezeichnet wird, vorgesehen. Der Spülwassertank 7 ist über die Klarwasserpumpe P2 mit zwei unterschiedlichen Zweigen verbunden: zum einen über das Gegenstück 5g mit der Mischkammer 2; und zum anderen mit einer Spülleitung 8. Die Einbringung von Klarwasser 7f ist hier durch die zweite Pumpe P2 zu- und abschaltbar. In dem Zweig zum Gegenstück 5g kann ein schaltbares Absperrventil 9a angeordnet sein welches die Einbringung von Klarwasser 7f zu- oder abschalten kann. Die Klarwasserpumpe P2 ist folglich dazu eingerichtet, Klarwasser 7f, insbesondere bei geöffnetem Absperrventil 9a, über das Gegenstück 5g in die Mischkammer 2 zu fördern. Da mittels der Dosierpumpe 4 in der Regel ein wesentlich kleinerer Volumenstrom erzeugbar ist als durch die Klarwasserpumpe P2, ist die Dosierpumpe 4 vorzugsweise mit einem Bypass 10 versehen. Durch den Bypass 10 wird ein Rückstau vor der Dosierpumpe 4 vermieden.

Außerdem kann mit Hilfe der Klarwasserpumpe P2 der Behälter 3, wenn dieser leer ist, nahezu restlos mit Klarwasser 7f gespült werden. Wenn dieser noch nicht leer ist, kann er alternativ oder zusätzlich zur Entnahme vorbereitet werden, indem der Adapter 5a geschlossen wird und nur die Trennstelle zwischen Adapter 5a und Gegenstück 5g gespült wird. In beiden Fällen wird das Kontaminationsrisiko für den Benutzer in einfacher Weise gesenkt.

Vorzugsweise weist der Adapter 5a eine in den Behälter 3 gerichtete Spüldüse auf, welche so angeschlossen ist, dass sie mit Fluid versorgt wird, wenn eine in den Behälter 3 gerichtete Strömung auftritt.

Der zweite Zweig, die Spülleitung 8, verläuft zwischen der Klarwasserpumpe P2 und der Saugseite der Spritzpumpe P1. Der Spülleitung 8 ist ein zweites, dem ersten analog ausgeführtes Gegenstück 5g' zugeordnet und vor dem zweiten Gegenstück 5g' ist ein Absperrventil 9b angeordnet. In das zweite Gegenstück 5g' kann ein mit einem Adapter 5a' versehener Behälter 3' eingesetzt werden, um diesen Behälter 3' zu spülen. Vorteilhaft ist hierbei, dass während eines üblichen Ausbringvorganges mit Dosierung aus Behälter 3 im ersten Gegenstück 5g zeitgleich der Behälter 3' im zweiten Gegenstück 5g' gespült werden kann. So kann der Behälter 3' zur endgültigen Entsorgung vorbereitet werden. Hierzu wird bei geöffnetem Absperrventil 9b mittels der Klarwasserpumpe P2 Klarwasser 7f in die Spülleitung 8 gefördert und somit vorzugsweise über eine Spüldüse im Adapter 5a' in den Behälter 3' gesprüht mit dem Ziel diesen nahezu restlos zu reinigen. Die Spülleitung 8 hinter dem Gegenstück 5g' ist so angeordnet, dass diese sich im Laufe eines obenstehenden Spülvorganges stetig bis zu einem vor der Spritzpumpe angeordnetem Absperrventil 9c füllt. Des Weiteren ist zwischen dem zweiten Gegenstück 5g' und dem Absperrventil 9c ein Füllstandsmelder 11 angeordnet, welcher dazu eingerichtet ist die Absperrventile 9b, 9c zu schalten. Um zu verhindern, dass Fluid aus der Spülleitung 8 kontinuierlich der Spritzpumpe P1 zugeführt wird, schaltet der Füllstandsmelder 11 das Absperrventil 9c erst dann auf offen, wenn die Spülleitung 8 hinter dem Gegenstück 5g' gefüllt ist. Gleichzeitig wird das Absperrventil 9b geschlossen, so dass zumindest zeitweise der Spülvorgang unterbrochen ist. Sobald die Spülleitung 8 bis zum Absperrventil 9b geleert ist, schalten das Absperrventil 9c auf geschlossen und das Absperrventil 9b auf offen vom Füllstandsmelder 11 gesteuert.

In einer nicht dargestellten Weiterbildung der Erfindung ist kein Absperrventil 9c vorgesehen. Stattdessen ist eine weitere Pumpe zwischen dem Füllstandsmelder 11 und der Mischkammer 2 vorgesehen, welche dazu eingerichtet ist, die Spülleitung 8 in die Mischkammer 2 zu entleeren.

Zusammenfassend weist das erste Fließbild in Fig.1 zwei hervorzuhebende Bestandteile auf. Erstens für den Zweig zwischen Klarwasserpumpe P2 und Mischkammer 2: der Behälter 3, die zumindest eine Dosierpumpe 4 und das Kupplungselement 5 bilden eine Dosiereinheit 12. Die Dosiereinheit 12 dient vorrangig der direkten Einspeisung von Pflanzenschutzmittel 3f in die Mischkammer 2, wo es mit der Brühe 1f vermischt und mittels der Spritzpumpe P1 über das Verteilergestänge 6 ausgebracht wird. Zusätzlich kann die Dosiereinheit 12 in Verbindung mit der Klarwasserpumpe P2 genutzt werden, um den Behälter 3 vollständig oder zumindest bis zum Adapter 5a zu reinigen. Über die Spüldüse wird dazu Klarwasser in den Behälter 3 eingebracht, so dass dieser anschließend nahezu gefahrlos entfernt werden kann.

Eine derartige Dosiereinheit 12 kann zusätzlich ein Absperrventil 9a umfassen. In vorteilhafter Weise ist dies der Fall, wenn zwei oder mehrere Dosiereinheiten 12 parallel verwendet werden.

Zweitens, zeigt das Fließbild die Spülleitung 8: die Spülleitung 8 kann in vorstehend geschilderter Weise genutzt werden, um einen beliebigen Behälter 3' zumindest annährend vollständig zu reinigen und so ggf. vorhandene Restmengen auszuspülen. Dies ist notwendig vor der endgültigen Entsorgung des Behälters 3'. Kennzeichnend für die Spülleitung 8 ist, dass ihr das weitere zweite Gegenstück 5g' zugeordnet ist, in welches der Behälter 3' mittels des Adapters 5a' eingesetzt werden kann.

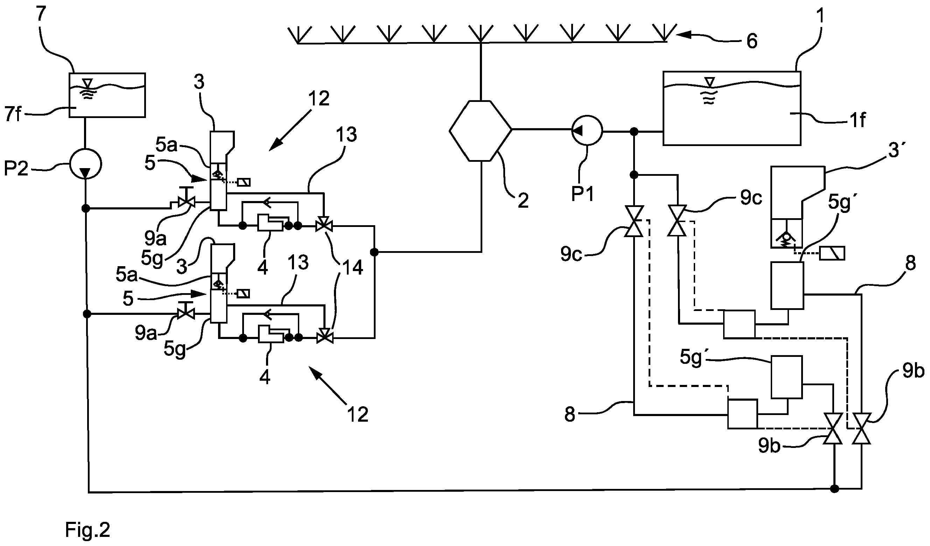

In Fig.2 ist ein zweites Fließbild einer erfindungsgemäßen Feldspritze gezeigt. Grundsätzlich weist diese Feldspritze den gleichen Aufbau auf, wie die vorstehend beschriebene Feldspritze mit dem Fließbild aus Fig.1. Die Besonderheit der erfindungsgemäßen Feldspritze mit dem Fließbild gemäß Fig.2 ist, dass diese sowohl zwei parallel zueinander angeschlossene Dosiereinheiten 12 aufweist, als auch zwei parallel zueinander angeschlossene Spülleitungen 8. Da die zusätzlichen Bestandteile gegenüber dem Fließbild in Fig.1 jeweils parallel angeschlossen sind, ist es möglich, dass sich ihre Anzahl unabhängig voneinander jeweils in besonders einfacher Weise den Bedürfnissen eines Benutzers anpassen lässt.

So ist beispielsweise denkbar, dass ein Benutzer mittels einer nicht abgebildeten Feldspritze beispielsweise Pflanzenschutzmittel 3f aus drei Dosiereinheiten 12 einspeisen möchte, während auf einer Spülleitung 8 ein Behälter 3' gespült wird. Ebenso denkbar ist, dass eben dieser Benutzer eine der Dosiereinheiten 12 zum Spülen nutzt während er aus den zwei verbleibenden Dosiereinheiten 12 Pflanzenschutzmittel 3f dosiert. Die Spülleitung 8 kann in diesem Fall ungenutzt sein und/oder entfallen.

Es ist möglich, dass eine in den Figuren nicht dargestellte Leitung zwischen dem Gegenstück 5g und der zumindest einen Dosierpumpe 4 vorgesehen ist, welche ein Wegeventil aufweist. Über das Wegeventil kann Spülbrühe direkt zum Füllstandsmelder 11 geleitet werden. In diesem Fall kann die Abflussseite der zum Spülen eingesetzten Dosiereinheit 12 mit der Spülleitung 8 verbunden sein, um die entstehende Flüssigkeit gezielt mit auszubringen. In diesem Fall kann auch das zweite Gegenstück 5g' entfallen. Dadurch kann eine kostengünstige Ausführungsform der Erfindung erreicht werden.

Ein weiterer Vorteil ist in diesem Fall dadurch gegeben, dass die Leitungen zwischen der Dosiereinheit 12 und der Mischkammer nicht mit Spülbrühe gefüllt werden. Dadurch steht auch im Falle eines Wechsels des Behälters 3 in diesen Leitungen immer die richtige Konzentration an Pflanzenschutzmittel zur Verfügung, sodass der Ausbringvorgang nahtlos fortgesetzt werden kann. Dadurch kann eine erhebliche Zeitersparnis und eine stets korrekt dosierte Ausbringung erreicht werden.

Eine weitere Besonderheit der Feldspritze mit dem Fließbild in Fig.2 ist, dass die Dosiereinheiten 12 eine zusätzliche Umlaufleitung 13 umfassen. Die Umlaufleitung 13 verläuft jeweils von der Druckseite der Dosierpumpe 4 zum Gegenstück 5g und ist über ein schaltbares Wegeventil 14 angebunden. Die Umlaufleitung 13 ist so angeschlossen, dass durch sie eine in den Behälter 3 gerichtete Strömung erzeugbar ist, so dass sich vorzugsweise die Spüldüse im Adapter 5a versorgen lässt. Wird das Wegeventil 14 so geschaltet, dass es nicht mehr zur Mischkammer 2 leitet sondern über die Umlaufleitung 13, ist eine Umlaufströmung über den Behälters 3 eingerichtet. Die Dosiereinheit 12 kann beispielsweise mittels der Klarwasserpumpe P2 mit einer gewissen Menge Trägerflüssigkeit 7f aus dem Spülwassertank 7 versorgt werden bevor das Absperrventil 9a geschlossen wird. Die nun in den Leitungen zwischen Absperrventil 9a und Wegeventil 14 bzw. Dosierpumpe 4 und Behälter 3 in Umlauf befindliche Fluidmenge lässt sich mittels der Dosierpumpe 4 umwälzen. Ist für den Behälter 3 beispielsweise eine an den Behälterwänden anhaftende Restmenge des Pflanzenschutzmittels 3f bekannt, kann die Menge der Trägerflüssigkeit 7f so bestimmt werden, dass die entstehende Fluidmenge pflanzenbaulich sinnvoll genutzt werden kann. Diese lässt sich durch Umschalten des Wegeventils 14 in die Mischkammer 2 einspeisen.

Außerdem kann die Umlaufleitung 13 genutzt werden, um ausschließlich Pflanzenschutzmittel 3f umzuwälzen, damit sich dieses nicht absetzen und so unvorteilhafter Weise entmischen kann.

Weiter ist denkbar, dass die Umlaufleitung 13 genutzt wird um Behälter 3 mit pulver- oder granulatförmigen Pflanzenschutzmittel 3f zu nutzen. Mittels der Umlaufleitung 13 kann unter Verwendung der zweiten Trägerflüssigkeit 7f solches Pflanzenschutzmittel 3f aufgelöst und der Mischkammer zugeführt werden bzw. anschließend ausgebracht werden.

Vorzugsweise weisen die Bauteile vorstehend beschriebener Ausführungsformen und Weiterbildungen, insbesondere sämtliche Tanks, Behälter und Kammern, welche durch Ent- und/oder Aufnahme von Fluiden, Unter- und/oder Überdruck erfahren, geeignete Entlüftungsmittel auf. Die geeigneten Entlüftungsmittel sind dazu eingerichtet, Druckunterschiede auszugleichen.

Um mit Hilfe einer erfindungsgemäßen Feldspritze Pflanzenschutzmittel 3f einzuspeisen und auf dem Feld auszubringen sind die folgenden Verfahrensschritte notwendig:
- Versehen des Behälters 3 mit Pflanzenschutzmittel 3f mit dem Adapter 5a,
- Einsetzen des Behälters 3 mit dem Adapter 5a in das Gegenstück 5g des Kupplungselementes 5 einer Dosiereinheit 12,
- Dosieren von Pflanzenschutzmittel 3f mittels der Dosierpumpe 4 aus dem Behälter 3 in die Mischkammer 2,
- Einbringen der ersten Trägerflüssigkeit 1f aus dem Trägerflüssigkeitstank 1 in die Mischkammer 2 mittels der Spritzpumpe P1,
- Verteilen der Flüssigkeit aus der Mischkammer 2 mittels des Verteilergestänges 6.

Umfasst die Feldspritze den Spülwassertank 7 kann im Betrieb der weitere Schritt ausgeführt werden:
- Einbringen der zweiten Trägerflüssigkeit 7f, vorzugsweise Klarwasser 7f, aus dem Spülwassertank 7 in das Kupplungselement 5 und/oder den Behälter 3.

Bei Vorhandensein der Klarwasserpumpe P2 ist beispielsweise zum Spülen der weitere Schritt möglich:
- Pumpen der zweiten Trägerflüssigkeit 7f durch das Kupplungselement 5 und/oder den Behälter 3 in die Mischkammer 2.

Ist der Behälter 3 nicht vollständig entleert und soll dennoch aus der Dosiereinheit 12 entfernt werden, beispielsweise weil der Ausbringvorgang beendet ist, kann einer der folgenden Schritte ausgeführt werden, um das Pflanzenschutzmittel 3f beim Spülvorgang nicht unerwünschter Weise zu verdünnen und den Benutzer zu schützen:
- Verschließen des Adapters zum Gegenstück hin,
- oder Öffnen des Adapters zum Gegenstück hin.

Umfasst die Feldspritze die Spülleitung 8 können in vorteilhafter Manier die folgenden Schritte ausgeführt werden, um während eines Ausbringvorganges den Behälter 3 zu ersetzen und für die Entsorgung vorzubereiten:
- Entfernen des Behälter 3 mit dem Adapter 5a aus dem Gegenstück 5g des Kupplungselementes 5,
- Einsetzen des Behälters 3 mit dem Adapter 5a in das zweite Gegenstück 5g' der Spülleitung 8,
- Versehen eines anderen Behälters 3 mit einem anderen Adapter 5a,
- Einsetzen des anderen Behälters 3 mit dem anderen Adapter 5a in das Gegenstück 5g des Kupplungselementes 5 der Dosiereiinheit 12,
- Dosieren mittels der Dosierpumpe 4 aus dem anderen Behälter 3 in die Mischkammer 2,
- Pumpen der zweiten Trägerflüssigkeit 7f durch die Spülleitung 8 und das zweite Gegenstück 5g' und/oder den in das zweite Gegenstück 5g' eingesetzten Behälter 3 zur Spritzpumpe P1.

Umfasst die Feldspritze mehrere Dosiereinheiten 12 und/oder mehrere Spülleitungen 8, wie beispielsweise in Fig.2 gezeigt, können die folgenden Schritte ausgeführt werden:
- Bestücken einer weiteren Dosiereinheit 12 mit einem weiteren Behälter 3,
- Dosieren mittels der Dosierpumpe 4 der weiteren Dosiereinheit 12 aus dem weiteren Behälter 3 in die Mischkammer 2,
   und/oder
- Einsetzen eines anderen weiteren Behälters 3' in zumindest ein weiteres Gegenstück 5g' einer weiteren Spülleitung 8,
- Pumpen der zweiten Trägerflüssigkeit 7f durch die weitere Spülleitung 8 und das weitere Gegenstück 5g' und/oder den eingesetzten Behälter 3' zur Spritzpumpe P1.

Insgesamt zeichnen sich erfindungsgemäße Feldspritzen dadurch aus, dass sie mit einer für den Benutzer risikoarmen Möglichkeit zur direkten Einspeisung von Pflanzenschutzmittel 3f eingerichtet sind. Zahlreiche Vorteile und denkbare Ausführungsformen sind der vorstehenden Beschreibung zu entnehmen.

### Bezugszeichenliste

- 1: Trägerflüssigkeitstank
- 1f: erste Trägerflüssigkeit, Brühe
- 2: Mischkammer
- 3, 3': Behälter
- 3f: Pflanzenschutzmittel
- 4: Dosierpumpe
- 5: Kupplungselement
- 5a, 5a': Adapter
- 5g, 5g': Gegenstück
- 6: Verteilergestänge
- P1: erste Pumpe, Spritzpumpe
- 7: Spülwassertank
- 7f: zweite Trägerflüssigkeit, Klarwasser
- P2: zweite Pumpe, Klarwasserpumpe
- 8: Spülleitung
- 9a, 9b, 9c: Absperrventil
- 10: Bypass
- 11: Füllstandsmelder
- 12: Dosiereinheit
- 13: Umlaufleitung
- 14: Wegeventil

## Patentansprüche

1. Landwirtschaftliche Feldspritze mit einem Trägerflüssigkeitstank (1), zumindest einem Behälter (3), insbesondere für Pflanzenschutzmittel (3f), einer ersten Pumpe (P1), einer Mischkammer (2) und einem Verteilergestänge (6), wobei dem zumindest einen Behälter (3) zumindest eine Dosierpumpe (4) zugeordnet ist, wobei der Trägerflüssigkeitstank (1) und die Dosierpumpe (4) mit der Mischkammer (2) verbunden sind und die erste Pumpe (P1) dazu eingerichtet ist, Flüssigkeit aus der Mischkammer (2) zum Verteilergestänge (6) zu fördern, **dadurch gekennzeichnet, dass** der zumindest eine Behälter (3) mittels eines flüssigkeitsdicht trennbaren Kupplungselementes (5), welches aus einem Adapter (5a) für den Anschluss am Behälter (3) und einem Gegenstück (5g) gebildet wird, mit der zumindest einen Dosierpumpe (4) verbunden ist.

2. Feldspritze nach Anspruch 1, **dadurch gekennzeichnet, dass die** Feldspritze einen Spülwassertank (7) umfasst, welcher über das Gegenstück (5g) mit der Mischkammer (2) verbunden ist und/oder zwischen Gegenstück (5g) und Spülwassertank (7) eine zweite Pumpe (P2) und/oder ein Absperrventil (9a) angeordnet ist.

3. Feldspritze nach zumindest einem der vorstehenden Ansprüche, **dadurch gekennzeichnet, dass** die Feldspritze eine zweite Pumpe (P2) umfasst, dass die zweite Pumpe (P2) dazu eingerichtet ist, eine zweite Trägerflüssigkeit (7f), vorzugsweise Klarwasser (7f), über das Gegenstück (5g) in die Mischkammer (2) zu fördern.

4. Feldspritze nach zumindest einem der vorstehenden Ansprüche, **dadurch gekennzeichnet, dass** der Adapter (5a) zum Gegenstück (5g) hin verschließbar ist.

5. Feldspritze nach zumindest einem der vorstehenden Ansprüche, **dadurch gekennzeichnet, dass** die Feldspritze zumindest eine Spülleitung (8) zwischen der zweiten Pumpe (P2) und der ersten Pumpe (P1) umfasst, dass der Spülleitung (8) ein weiteres Gegenstück (5g') zugeordnet ist.

6. Feldspritze nach zumindest einem der vorstehenden Ansprüche, **dadurch gekennzeichnet, dass** der Behälter (3), die zumindest eine Dosierpumpe (4)und das Kupplungselement (5) eine Dosiereinheit (12) bilden, dass die Feldspritze zumindest zwei, vorzugweise parallel angeschlossene, Dosiereinheiten (12) umfasst.

7. Feldspritze nach zumindest einem der vorstehenden Ansprüche, **dadurch gekennzeichnet, dass** eine Leitung zwischen dem Gegenstück (5g) und der zumindest einen Dosierpumpe (4) vorgesehen ist, welche ein Wegeventil aufweist.

8. Feldspritze nach zumindest einem der vorstehenden Ansprüche, **dadurch gekennzeichnet, dass** die Feldspritze zumindest zwei, vorzugsweise parallel angeschlossene, Spülleitungen (8) umfasst.

9. Feldspritze nach zumindest einem der vorstehenden Ansprüche, **dadurch gekennzeichnet, dass** die Feldspritze zumindest zwei Dosiereinheiten (12) und zumindest zwei Spülleitungen (8) umfasst.

10. Verfahren zum Betreiben einer Feldspritze, vorzugsweise nach zumindest einem der vorstehenden Ansprüche, **gekennzeichnet durch** die folgenden Verfahrensschritte:
*a*. Versehen eines Behälters (3), insbesondere für Pflanzenschutzmittel (3f), mit einem Adapter (5a),
*b.* Einsetzen des Behälters (3) mit dem Adapter (5a) in ein Gegenstück (5g) eines Kupplungselementes (5),
*c*. Dosieren mittels zumindest einer Dosierpumpe (4) aus dem Behälter (3) in eine Mischkammer (2),
*d.* Einbringen einer ersten Trägerflüssigkeit (1f) aus einem Trägerflüssigkeitstank (1) in die Mischkammer (2) mittels einer ersten Pumpe (P1),
*e.* Verteilen von Flüssigkeit aus der Mischkammer (2) mittels eines Verteilergestänges (6).

11. Verfahren nach Anspruch 10, **gekennzeichnet durch** den weiteren Schritt:
*a.* Einbringen einer zweiten Trägerflüssigkeit (7f), vorzugsweise Klarwasser (7f), aus einem Spülwassertank (7) in das Kupplungselement (5) und/oder den Behälter (3).

12. Verfahren nach zumindest einem der Ansprüche 10 und 11, **gekennzeichnet durch** den weiteren Schritt:
*a.* Pumpen der zweiten Trägerflüssigkeit (7f) durch das Kupplungselement (5) und/oder den Behälter (3) in die Mischkammer (2).

13. Verfahren nach zumindest einem der Ansprüche 10 bis 12, **gekennzeichnet durch** den weiteren Schritt:
*a.* Verschließen des Adapters (5a) zum Gegenstück (5g) hin.

14. Verfahren nach zumindest einem der Ansprüche 10 bis 13, **gekennzeichnet durch** die weiteren Schritte:
*a.* Entfernen des Behälters (3) mit dem Adapter (5a) aus dem Gegenstück (5g) des Kupplungselementes (5),
*b.* Einsetzen des Behälters (3) mit dem Adapter (5a) in ein zweites Gegenstück (5g') einer Spülleitung (8),
*c.* Versehen eines zweiten Behälters (3) mit einem zweiten Adapter (5a),
*d.* Einsetzen des zweiten Behälters (3) mit dem zweiten Adapter (5a) in das Gegenstück (5g) des Kupplungselementes (5),
*e.* Dosieren mittels der zumindest einen Dosierpumpe (4) aus dem zweiten Behälter (3) in die Mischkammer (2),
*f.* Pumpen der zweiten Trägerflüssigkeit (7f) durch die Spülleitung (8) und das zweite Gegenstück (5g') und/oder den in das zweite Gegenstück (5g') eingesetzten Behälter (3) zur ersten Pumpe (P1).

15. Verfahren nach zumindest einem der Ansprüche 10 bis 14, **gekennzeichnet durch** die weiteren Schritte:
*a.* Bestücken zumindest einer weiteren Dosiereinheit (12) mit einem weiteren Behälter (3),
*b.* Dosieren mittels zumindest einer Dosierpumpe (4) der weiteren Dosiereinheit (12) aus dem weiteren Behälter (3) in die Mischkammer (2),
und/oder
*c.* Einsetzen eines anderen weiteren Behälters (3') in zumindest ein weiteres Gegenstück (5g') einer weiteren Spülleitung (8),
d. Pumpen der zweiten Trägerflüssigkeit (7f) durch die weitere Spülleitung (8) und das weitere Gegenstück (5g') und/oder den eingesetzten Behälter (3') zur ersten Pumpe (P1).
